# EUROPÄISCHE PATENTSCHRIFT

(11) **EP 3 388 295 B1**
(45) Veröffentlichungstag und Bekanntmachung des Hinweises auf die Patenterteilung: **01.02.2023**
(21) Anmeldenummer: 18160072.7
(22) Anmeldetag: 06.03.2018
(51) Int. Cl.: B60S 13/00, G05B 1/00, G05B 19/418

(54) **VERFAHREN ZUM BETREIBEN EINES TRANSPORTSYSTEMS SOWIE ENTSPRECHENDES TRANSPORTSYSTEM**
METHOD OF OPERATING A TRANSPORT SYSTEM AND CORRESPONDING TRANSPORT SYSTEM
PROCÉDÉ DE FONCTIONNEMENT D'UN SYSTÈME DE TRANSPORT AINSI QUE SYSTÈME DE TRANSPORT CORRESPONDANT

(30) Priorität: 12.04.2017 DE 102017206292
(43) Veröffentlichungstag der Anmeldung: 17.10.2018
(73) Patentinhaber: AUDI AG, 85045 Ingolstadt (DE)
(72) Erfinder: Idelevitch, Vladimir, 90441 Nürnberg (DE); Fendt, Christina, 85049 Ingolstadt (DE); Schindler, Sebastian, 85049 Ingolstadt (DE); Ertl, Maximilian, 85049 Ingolstadt (DE); Beutler, Stephan, 85049 Ingolstadt (DE); Budnik, Daniel, 85053 Ingolstadt (DE); Hehne, Frank, 81543 München (DE); Reuschenbach, Simon, 85049 Ingolstadt (DE); Bramfeld, Arne, 70193 Stuttgart (DE)

(56) Entgegenhaltungen:
- WO-A1-2004/045932
- DE-A1-102014 210 088
- GB-A- 2 377 422
- JP-A- 2016 216 936
- US-A1- 2010 154 606

## Beschreibung

Die Erfindung betrifft ein Verfahren zum Betreiben eines Transportsystems gemäß Anspruch 1, das eine Vielzahl von Transportmittel aufweist. Das Transportsystem weist eine in einer Transportmittelgesamtmenge zusammengefasste Vielzahl von unabhängig voneinander bewegbaren, insbesondere emissionslosen Transportmitteln auf. Bei Auftreten einer Transportmittelanforderung an einer Zentralsteuereinheit werden von dieser mehrere Transportmittel aus der Transportmittelgesamtmenge ausgewählt, einer Transportmittelteilmenge zugeordnet und autonom einem Transportstartort zugeführt, wobei an dem Transportstartort ein mehrere Radachsen aufweisendes Fahrzeug von den in der Transportmittelteilmenge enthaltenen Transportmitteln gemeinsam aufgenommen wird, indem auf voneinander abgewandten Seiten der Radachsen jeweils wenigstens eines der Transportmittel benachbart zu wenigstens einem Rad der jeweiligen Radachse und in axialer Richtung bezüglich der Radachse des Rads gesehen in Überdeckung mit dem Rad angeordnet wird und anschließend die Transportmittel zum Anheben des Fahrzeugs autonom aufeinander zu verlagert werden oder indem auf einander zugewandten Seiten der Radachsen jeweils wenigstens eines der Transportmittel benachbart zu wenigstens einem Rad der jeweiligen Radachse und in axialer Richtung bezüglich der Radachse des Rads gesehen in Überdeckung mit dem Rad (angeordnet wird und anschließend die Transportmittel zum Anheben des Fahrzeugs autonom voneinander weg verlagert werden. Die Erfindung betrifft weiterhin ein entsprechendes Transportsystem gemäß Anspruch 8.

Seit geraumer Zeit ist es zu beobachten, dass sich die Randbedingungen für Mobilität drastisch und rasch verändern. Dies gilt insbesondere für die urbane Mobilität, also die Städte betreffende Mobilität. Diese Veränderung resultiert beispielsweise aus Platzmangel, welcher insbesondere zu Stau führt, sowie aus Emissionen von herkömmlichen Fahrzeugen beziehungsweise Kraftfahrzeugen, welche üblicherweise mit Brennstoffen beziehungsweise Kraftstoffen betrieben werden. In einigen urbanen Regionen ist bereits heute das Einfahren mit herkömmlichen Kraftfahrzeugen nicht mehr zulässig oder zumindest nur noch eingeschränkt erlaubt. Um sich an diesen Wandel der Mobilität anzupassen, sind neue Konzepte notwendig, welche insbesondere eine individuelle und nahtlose Mobilität ermöglichen.

Aus dem Stand der Technik ist die Druckschrift WO 2004/045932 A1 bekannt. Um ohne Verwendung eines üblichen Hub- oder Fördergerätes ein Fahrzeug von einer Tragfläche aufnehmen zu können, wird darin eine Aufnahmeeinrichtung für ein mit Rädern auf einer Tragfläche stehendes Fahrzeug vorgeschlagen, das gekennzeichnet ist durch eine in Fahrtrichtung des Fahrzeugs verschiebbare Tragvorrichtung, durch mindestens eine in Fahrtrichtung des Fahrzeugs verlaufende Verschiebebahn für die Räder des Fahrzeugs, die zumindest an einem Ende der Verschiebebahn nur so hoch über die Tragfläche angeordnet ist, dass sie unterhalb der Achse der Räder des Fahrzeugs liegt, und durch eine Rückhalteeinrichtung für die Räder, die längs der Verschiebebahn synchron zur Vorschubbewegung der Tragvorrichtung mit gleicher Vorschubgeschwindigkeit jedoch in entgegengesetzter Richtung verschiebbar ist.

Aus der Druckschrift GB 2 377 422 A ist ein Verfahren und eine Vorrichtung bekannt, um ein geparktes vierrädriges Fahrzeug anzuheben, wobei zwei Paare einer Rolleinrichtung so angeordnet werden, dass jeweils eine Rolleinrichtung an jedem Rad vorliegt, wobei die Rolleinrichtung in jedem Paar voneinander wegbewegt werden um die Rolleinrichtungen durch einen Stoß in Anlagekontakt mit dem jeweiligem Rad zu bringen und dadurch das Fahrzeug auf die Rolleinrichtungen zu heben. Ein Anschlag an jeder Rolleinrichtung begrenzt die Bewegung der Rolleinrichtung unterhalb der jeweiligen Räder.

Dabei können die Rolleinrichtungen auf Achsen oder Längsträgern montiert sein, um eine größere Verstellbarkeit zu ermöglichen.

Weiterhin ist aus der Druckschrift US 2010/0154606 A1 eine Vorrichtung zum Anheben wenigstens eines Rades eines Schienenfahrzeugs bekannt. Die Vorrichtung besteht aus einer ersten und einer zweiten Hebevorrichtung, die auf jeweils einer Seite des Rades angeordnet werden, wobei wenigstens die erste Hebevorrichtung ein Kraftübertragungselement aufweist, dass zur Kraftübertragung eine schräge Fläche enthält.

Es ist daher Aufgabe der Erfindung, ein Verfahren zum Betreiben eines Transportsystems vorzuschlagen, welches gegenüber bekannten Verfahren Vorteile aufweist, insbesondere eine solche individuelle und nahtlose Mobilität ermöglicht.

Dies wird erfindungsgemäß mit einem Verfahren zum Betreiben eines Transportsystems mit den Merkmalen des Anspruchs 1 erreicht.. Dabei ist vorgesehen, dass die Transportmittel mittels einer Kommunikationsverbindung zu dem Fahrzeug wenigstens eine Fahrzeugkomponente des Fahrzeugs derart ansteuern, dass das Rad während des Aufladens frei drehbar ist oder sich zum Auffahren auf das Transportmittel dreht und/oder dass das Rad nach dem Aufladen, insbesondere während des Transports, blockiert ist.

Das Transportsystem dient insoweit dem Transport von Fahrzeugen. Das Fahrzeug kann grundsätzlich beliebig ausgestaltet sein, insbesondere ist die Anzahl der Radachsen grundsätzlich beliebig, ebenso die Anzahl der Räder pro Radachse. Vorzugsweise weist das Fahrzeug jedoch eine Anzahl an Rädern auf, welche eine stabile Anordnung des Fahrzeugs auf einem Untergrund und mithin auch auf den Transportmitteln allein mittels der Räder möglich macht. Bevorzugt sind daher mindestens drei Räder oder vier Räder vorgesehen, die voneinander beabstandet an dem Fahrzeug vorliegen.

Das Transportsystem beziehungsweise das Transportmittel ist an das Fahrzeug angepasst beziehungsweise zumindest anpassbar. Dies bedeutet beispielsweise, dass das Transportmittel eine für die Räder geeignete Aufstandsfläche und/oder Mittel zum Fixieren der Räder auf dem Transportmittel aufweist. Beispielsweise dient das Transportsystem dem Transportieren des Fahrzeugs ohne in dem Fahrzeug befindliche Personen, insbesondere also ohne einen Fahrer des Fahrzeugs.

Vorzugsweise wird das Transportsystem jedoch zum Transportieren des Fahrzeugs verwendet, während sich in dem Fahrzeug wenigstens eine Person, beispielsweise der Fahrer, aufhält. Dies ist insbesondere im Zusammenhang mit der urbanen Mobilität in einem Stadtgebiet sinnvoll. Beispielsweise fährt das Fahrzeug aus eigener Kraft, also insbesondere unter Einsatz einer Brennkraftmaschine, bis zu einer Gebietsgrenze, insbesondere Stadtgrenze, und wird an der Gebietsgrenze von dem Transportsystem beziehungsweise den Transportmitteln aufgenommen und in das von der Gebietsgrenze abgegrenzte Gebiet hinein transportiert, bevorzugt bei abgeschalteter Brennkraftmaschine. Somit ist es möglich, das Fahrzeug bei abgeschaltetem Antriebsaggregat zu bewegen, insbesondere zu dem gewünschten Transportzielort, der in dem abgegrenzten Gebiet liegen kann.

Das Transportsystem weist die Vielzahl von Transportmitteln auf. Die Transportmittel können grundsätzlich untereinander verschieden sein oder zumindest teilweise oder insgesamt identisch aufgebaut sein. Jedes der Transportmittel ist unabhängig von jedem anderen der Transportmittel bewegbar. Das bedeutet bevorzugt, dass jedes der Transportmittel völlig autonom betreibbar ist, also beispielsweise autonom und automatisch den ihm zugewiesenen Transportstartort und/oder Transportzielort anfährt beziehungsweise anfahren kann. Hierzu sind die Transportmittel entsprechend ausgestaltet, weisen also zum Beispiel Mittel zur Durchführung eines autonomen beziehungsweise selbstständigen Fahrbetriebs auf. Diese Mittel können insbesondere eine Navigationseinrichtung, eine Routenfindungseinrichtung, eine Umfelderkennungseinrichtung oder dergleichen umfassen.

Die Transportmittel sind bevorzugt emissionslos, erzeugen bei ihrem Betrieb also keine oder nahezu keine Abgase. Dies wird beispielsweise durch einen rein elektrischen Antrieb der Transportmittel gewährleistet. Bevorzugt verfügt insoweit jedes der Transportmittel über wenigstens eine elektrische Maschine beziehungsweise Elektromotor zu seinem Antrieb sowie einen entsprechenden Energiespeicher für die zum Betreiben der elektrischen Maschine benötigte elektrische Energie. Zusätzliche Anforderungen an das beziehungsweise die Transportmittel können sich aus gegebenenfalls einzuhaltenden Sicherheitsbestimmungen des Betriebsorts ergeben, insbesondere falls die Transportmittel auf öffentlichem Gebiet, bevorzugt öffentlichen Straßen, betreibbar sein sollen.

Es ist nun vorgesehen, dass die Transportmittel des Transportsystems in der Transportmittelgesamtmenge zusammengefasst sind. Die Transportmittelgesamtmenge ist insoweit eine logische Zusammenfassung aller Transportmittel des Transportsystems, unabhängig davon, wo sich diese momentan befinden. Die in der Transportmittelgesamtmenge enthaltenen Transportmittel können zumindest unabhängig voneinander jeweils an unterschiedlichen Orten, zumindest teilweise an wenigstens einem Ort oder mehreren Orten oder alle an dem gleichen Ort vorliegen, beispielsweise einem gemeinsamen Startort. In jedem Fall stellen die Transportmittel, auch wenn sie über ein weites Gebiet verteilt sind, jedoch einen Bestandteil der Transportmittelgesamtmenge dar.

Trifft an der Zentralsteuereinheit die Transportmittelanforderung ein, welche beispielsweise durch eine Bedienperson und/oder durch eine Assistenzeinrichtung ausgelöst wird, so wird die Transportmittelteilmenge erstellt, nämlich aus Transportmitteln, welche in der Transportmittelgesamtmenge enthalten sind. Das Zusammenstellen der Transportmittelmenge erfolgt, indem zunächst das zu transportierende Fahrzeug ausgewertet beziehungsweise analysiert wird und eine zum Durchführen des Transports des Fahrzeugs hinreichende Transportmittelanzahl ermittelt wird. Diese richtet sich zum Beispiel nach der Anzahl der Radachsen und/oder der Anzahl der Räder. Aus der Transportmittelgesamtmenge wird nun eine der Transportmittelanzahl entsprechende Anzahl an Transportmittels ausgewählt und der Transportmittelteilmenge zugeordnet.

Bevorzugt werden bei dem Auswählen oder Zuordnen Betriebsparameter beziehungsweise Zustandsparameter der Transportmittel berücksichtigt, insbesondere ein momentaner Standort der Transportmittel, eine verfügbare Reichweite und dergleichen. Auch eine Eignung des jeweiligen Transportmittels zum Transportieren des Fahrzeugs kann ausgewertet werden. Hierzu wird beispielsweise wenigstens ein Ladungsparameter, wie der Typ beziehungsweise die Art des Fahrzeugs, das Gewicht des Fahrzeugs und/oder eine vorhandene Transporteinrichtung für das Fahrzeug, also beispielsweise ein Transportmittelaufsatz oder dergleichen, berücksichtigt.

Besonders bevorzugt wird eine Verfügbarkeit der Transportmittel beziehungsweise des jeweiligen Transportmittels berücksichtigt. Das bedeutet, dass bereits einer anderen Transportmittelteilmenge zugeordnete Transportmittel nicht ausgewählt und der Transportmittelteilmenge zugeordnet werden, weil sie derzeit nicht verfügbar sind. Umgekehrt bedeutet dies, dass die der Transportmittelteilmenge zugeordneten Transportmittel als nicht verfügbar gekennzeichnet werden und keiner anderen Transportmittelteilmenge zugeordnet werden, solange dies der Fall ist, sie also der Transportmittelteilmenge zugeordnet sind. Erst bei oder nach einem Auflösen der Transportmittelteilmenge werden die bislang in der Transportmittelteilmenge enthaltenen Transportmittel erneut als verfügbar gekennzeichnet und können entsprechend der anderen Transportmittelteilmenge zugeordnet werden.

Bevorzugt erhält die Zentralsteuereinheit zusammen mit der Transportmittelanforderung die Information, welches Fahrzeug zu transportieren ist und/oder Kenngrößen des Fahrzeugs, also beispielsweise die Art beziehungsweise der Typ, das Gewicht beziehungsweise die Masse, eine Anzahl der Radachsen, eine Anzahl der Räder des Fahrzeugs oder dergleichen. Aus diesen Informationen kann die Zentralsteuereinheit die zum Durchführen des Transports hinreichende Transportmittelanzahl ermitteln und die geeigneten Transportmittel auswählen.

Zusätzlich zu der Transportmittelanzahl wird der Transportstartort ermittelt. Hierbei entsprechen sich die Transportstartorte aller der Transportmittelteilmenge zugeordneten Transportmittel. Der Transportstartort ist bevorzugt ebenfalls Bestandteil der Transportmittelanforderung beziehungsweise wird gemeinsam mit dieser an die Zentralsteuereinheit übermittelt. Der Transportstartort wird insoweit beispielsweise von der Bedienperson und/oder der Assistenzeinrichtung vorgegeben.

Nach dem Zuordnen der Transportmittel zu der Transportmittelteilmenge werden die Transportmittel autonom ihrem jeweiligen Transportstartort beziehungsweise dem Transportstartort zugeführt. Jedem der Transportmittel wird also der ihn betreffende Transportstartort übermittelt, woraufhin das Transportmittel diesen autonom ansteuert. Bevorzugt wird allen Transportmitteln der Transportmittelteilmenge derselbe Transportstartort zugeordnet beziehungsweise übermittelt. Es kann vorkommen, dass die Transportmittel zunächst an völlig unterschiedlichen Standorten vorliegen und nachfolgend demselben Transportstartort zugeführt werden.

Das Zuführen erfolgt autonom, also ohne Einfluss der Bedienperson und/oder der Assistenzeinrichtung, welche die Transportmittelanforderung ausgelöst hat. Vielmehr übernimmt bevorzugt jedes der Transportmittel selbst seine Routenplanung, welche es von seinem momentanen Standort zu dem Transportstartort führt. Die Routenplanung kann jedoch auch von der Zentralsteuereinheit übernommen werden und beispielsweise vor dem Beginn des Zuführens oder bei dem Beginn des Zuführens dem jeweiligen Transportmittel übermittelt werden. Jedes der Transportmittel ist für einen vollständig autonomen Transportbetrieb beziehungsweise Fahrbetrieb ausgerüstet. Insbesondere verfügt jedes der Transportmittel insoweit über eine entsprechende Sensoreinrichtung, insbesondere eine Umfelderkennungseinrichtung, die vorzugsweise wenigstens einen Umfeldsensor aufweist, oder dergleichen.

Haben die in der Transportmittelteilmenge vorliegenden Transportmittel den Transportstartort erreicht, so wird das zu transportierende Fahrzeug aufgenommen und der Transport des Fahrzeugs zu dem Transportzielort durchgeführt. Hierbei ist es vorgesehen, dass mehrere der Transportmittel gemeinsam das Fahrzeug zu dem gemeinsamen Transportzielort transportieren. Von Bedeutung ist jedoch stets, dass die Transportmittel der Transportmittelteilmenge zugeordnet sind, also einander logisch zugeordnet sind, insbesondere in der Zentralsteuereinheit beziehungsweise einem Speicher der Zentralsteuereinheit.

Das gemeinsame Aufnehmen des Fahrzeugs erfolgt, indem die in der Transportmittelteilmenge enthaltenen Transportmittel jeweils benachbart zu wenigstens einem Rad der entsprechenden Radachse angeordnet, also in Fahrtrichtung vor oder hinter dem Rad, sodass das Transportmittel in axialer Richtung bezüglich der Radachse des Rads gesehen in Überdeckung mit dem Rad angeordnet ist, insbesondere in vollständiger Überdeckung. Beispielsweise werden die Transportmittel derart angeordnet, dass sie jeweils an einem Rad des Fahrzeugs anliegen, also mit diesem in Berührkontakt stehen.

Das Anordnen der Transportmittel bezüglich der Radachsen beziehungsweise der Räder des Fahrzeugs erfolgt autonom, wobei hierzu bevorzugt die Transportmittel miteinander kommunizieren, entweder direkt oder mittelbar über die Zentralsteuereinheit. Beispielsweise erfassen die Transportmittel das jeweilige Rad des Fahrzeugs mittels einer geeigneten Erfassungsvorrichtung, welche beispielsweise optisch, akustisch oder induktiv arbeitet.

Anschließend werden die Transportmittel zum Anheben des Fahrzeugs autonom aufeinander zu, wenn diese sich außerhalb des Bereichs zwischen den Achsen befinden, oder voneinander weg verlagert, wenn die Transportmittel sich im Bereich zwischen den Achsen befinden. Dies geschieht vorzugsweise im Wesentlichen in der Fahrzeuglängsrichtung. Die Verlagerung erfolgt dabei derart, dass das Fahrzeug beziehungsweise seine Radachsen von den Transportmitteln gemeinsam in die Höhe gedrängt wird/werden, sodass nachfolgend das Fahrzeug beziehungsweise seine Räder auf den Transportmitteln zu liegen kommt/kommen. Beispielsweise weisen die Transportmittel zum Aufnehmen des Fahrzeugs eine Schrägfläche beziehungsweise Rampe auf, welche durch das Aufeinanderzuverlagern der Transportmittel unter das Fahrzeug beziehungsweise dessen Räder gedrängt wird und dieses mithin anhebt.

Beispielsweise ist die Schrägfläche beziehungsweise Rampe in etwa mittig an dem Transportmittel ausgebildet. Wenigstens einseitig, vorzugsweise beidseitig, der Schrägfläche beziehungsweise Rampe kann (jeweils) ein Gehäuseelement angeordnet sein, wobei in dem Gehäuseelement beispielsweise die Antriebseinrichtung beziehungsweise der Elektromotor, der Energiespeicher oder dergleichen angeordnet ist. Im Falle zweier sich an die Schrägfläche beziehungsweise die Rampe anschließender Gehäuseelemente liegt eine im Schnitt im Wesentlichen U-förmige Ausgestaltung des Transportmittels vor, weil die Gehäuseelemente die Schrägfläche beziehungsweise Rampe wenigstens bereichsweise, insbesondere durchgehend, in die von dem Untergrund abgewandte Richtung überragen. Insoweit stellen die Gehäuseelemente zugleich eine Haltevorrichtung für das auf dem Transportmittel angeordnete Rad des Fahrzeugs dar, welches mithin nicht in seitlicher Richtung beziehungsweise in axialer Richtung bezüglich der Radachse von der Schrägfläche beziehungsweise Rampe heruntergelangen kann, sondern vielmehr an den Gehäuseelementen anliegend zu liegen kommt.

Zusätzlich oder alternativ können geeignete Haltemittel an dem Transportmittel ausgebildet sein, welche dem Halten des Rads bezüglich des Transportmittels dienen. Die Haltemittel können beispielsweise in Form einer Mulde oder Aushebung ausgestaltet sein, in welcher das Rad nach dem Anheben des Fahrzeugs zu liegen kommt. Alternativ kann eine Wand derart angeordnet sein, dass das Rad während des Anhebens nicht über die Schrägfläche beziehungsweise Rampe hinaus verlagert werden kann. Entsprechend soll das Rad nach dem Anheben des Fahrzeugs an der Wand anliegen. Alternativ oder zusätzlich kann es selbstverständlich vorgesehen sein, das jeweilige Rad auf dem entsprechenden Transportmittel mittels eines geeigneten Aktuators formschlüssig und/oder kraftschlüssig festzusetzen.

Nach dem Anheben des Fahrzeugs transportieren die Transportmittel dieses gemeinsam zu dem gemeinsamen Transportzielort. Nach dem Erreichen des Transportzielorts durch die Transportmittel wird das Fahrzeug vorzugsweise abgesetzt und anschließend die Transportmittelteilmenge aufgelöst. Das bedeutet schlussendlich, dass die in der Transportmittelteilmenge bislang enthaltenen Transportmittel wieder als verfügbar gekennzeichnet werden, sodass sie erneut von der Zentralsteuereinheit zu einer Transportmittelteilmenge zugeordnet werden können. Das Kennzeichnen der Transportmittel als verfügbar erfolgt wiederum bevorzugt in der Zentralsteuereinheit beziehungsweise deren Speicher, sodass die Verfügbarkeit der einzelnen Transportmittel zentral vorgehalten wird und bei Bedarf überprüft werden kann.

Eine derartige Vorgehensweise ermöglicht ein äußerst flexibles Betreiben des Transportsystems, insbesondere die vorstehend bereits erwähnte individuelle und nahtlose Mobilität. Dies rührt insbesondere von der Modularität des Transportsystems her, dessen Transportmittel beliebig zusammengefasst und zum Transportieren des Fahrzeugs herangezogen werden können. Die nahtlose Mobilität wird insbesondere gewährleistet, indem das Fahrzeug teilweise aus eigener Kraft und teilweise mittels der Transportmittel verlagert wird, wobei in ersterem Fall die Brennkraftmaschine des Fahrzeugs in Betrieb und in letzterem Fall bevorzugt außer Betrieb ist, insbesondere zumindest bis zum Erreichen des Transportzielorts.

Im Rahmen der Erfindung ist vorgesehen, dass die Transportmittel mittels der Kommunikationsverbindung zu dem Fahrzeug wenigstens die eine Fahrzeugkomponente des Fahrzeugs ansteuern. Die Kommunikationsverbindung wird vorzugsweise nach dem Erreichen des Transportstartorts durch die Transportmittel aufgebaut, vor dem Anheben des Fahrzeugs. Die Kommunikationsverbindung kann unmittelbar von den Transportmitteln zu dem Fahrzeug beziehungsweise der Fahrzeugkomponente aufgebaut werden. Auch eine lediglich mittelbare Kommunikationsverbindung der Transportmittel zu dem Fahrzeug beziehungsweise der Fahrzeugkomponente über die Zentralsteuereinheit kann zusätzlich oder alternativ vorgesehen sein. Über die Kommunikationsverbindung können die Transportmittel die Fahrzeugkomponente des Fahrzeugs ansteuern. Die Kommunikationsverbindung kann drahtlos oder drahtgebunden sein.

Zusätzlich oder alternativ zu der Kommunikationsverbindung kann eine elektrische Verbindung zur Energieübertragung vorgesehen sein. Beispielsweise wird über diese ein Energiespeicher und/oder eine Energiequelle des Fahrzeugs mit wenigstens einem der Transportmittel elektrisch verbunden, nämlich vorzugsweise einer Antriebseinrichtung, insbesondere dem Elektromotor des Transportmittels. Über die elektrische Verbindung kann das wenigstens eine Transportmittel, insbesondere dessen Antriebseinrichtung, mit elektrischem Strom betrieben werden, der von dem Fahrzeug bereitgestellt wird. Der bereitgestellte Strom wird zum Beispiel dem Energiespeicher des Fahrzeugs entnommen. Zusätzlich oder alternativ kann es zumindest zeitweise vorgesehen sein, die Brennkraftmaschine des Fahrzeugs zum Erzeugen von elektrischem Strom zu betreiben, sodass die Brennkraftmaschine Bestandteil der vorstehend erwähnten Energiequelle ist. Die Brennkraftmaschine dient insoweit als Range Extender. Eine solche Betriebsweise wird jedoch bevorzugt lediglich im Notfall durchgeführt.

Eine Weiterbildung der Erfindung sieht vor, dass als Fahrzeugkomponente eine Signalanlage des Fahrzeugs oder eine Antriebseinrichtung des Fahrzeugs, insbesondere ein Antriebsaggregat und/oder ein Gangwechselgetriebe, und/oder eine Bremsanlage des Fahrzeugs verwendet wird. Über die Kommunikationsverbindung kann insoweit die Antriebseinrichtung und/oder die Bremsanlage des Fahrzeugs angesteuert werden. Beispielsweise wird die Antriebseinrichtung, welche das Antriebsaggregat und/oder das Gangwechselgetriebe aufweist, zum Auffahren des Fahrzeugs auf die Transportmittel angesteuert, indem mittels des Antriebsaggregats ein Drehmoment auf das entsprechende Rad beziehungsweise die entsprechende Radachse aufgebracht wird. Es kann jedoch auch vorgesehen sein, die Antriebseinrichtung und/oder die Bremsanlage derart anzusteuern, dass das Rad beziehungsweise die Räder, welche mittels der Transportmittel angehoben werden sollen, für eine Drehbewegung freigegeben werden, sodass die Transportmittel ohne weiteres zum Anheben des Fahrzeugs aufeinander zu verlagert werden können. Zusätzlich oder alternativ ist das Ansteuern der Signalanlage des Fahrzeugs über die Kommunikationsverbindung vorgesehen. Beispielsweise wird während des Anhebens und/oder des Transportierens eine Warnblinkanlage des Fahrzeugs aktiviert, welche Bestandteil der Signalanlage ist. Es kann auch vorgesehen sein, eine Fahrtrichtungsanzeigeanlage der Signaleinrichtung zum Anzeigen von Fahrtrichtungsänderungen der Transportmittel und mithin auch des Fahrzeugs zu verwenden.

Die Erfindung sieht vor, dass die Transportmittel die Fahrzeugkomponente derart ansteuern, dass das Rad während des Aufladens frei drehbar ist oder sich zum Auffahren auf das Transportmittel dreht und optional zusätzlich dass das Rad nach dem Aufladen, insbesondere während des Transports blockiert ist. Auf eine derartige Vorgehensweise wurde vorstehend bereits hingewiesen. Besonders bevorzugt wird die Fahrzeugkomponente, also insbesondere die Antriebseinrichtung und die Bremsanlage, derart angesteuert, dass das Anheben des Fahrzeugs unterstützt wird, nachfolgend jedoch die Räder gegen ein unbeabsichtigtes Herunterrollen von den Transportmitteln gesichert sind. Beispielsweise wird also das Rad nach dem Aufladen durch Abstellen des Antriebsaggregats und Einlegen eines Gangs an dem Gangwechselgetriebe, insbesondere eines kleinsten Gangs des Gangwechselgetriebes, und/oder durch Bremsen des Rads mittels der Bremsanlage zumindest teilweise, insbesondere vollständig blockiert.

Eine weitere Ausgestaltung der Erfindung sieht vor, dass das Fahrzeug nach dem Anheben, insbesondere während des Transports, auf den Transportmitteln festgesetzt wird. Hierzu kann beispielsweise - wie vorstehend bereits erläutert - das Rad nach dem Aufladen beziehungsweise während des Transports blockiert werden, insbesondere durch entsprechendes Ansteuern der Fahrzeugkomponente über die Kommunikationsverbindung. Auch andere Möglichkeiten zum Festsetzen des Fahrzeugs auf den Transportmitteln können jedoch vorgesehen sein. Beispielsweise verfügen die Transportmittel über entsprechende Haltemittel, mittels welchen das Fahrzeug, insbesondere das auf dem jeweiligen Transportmittel angeordnete Rad, kraftschlüssig und/oder formschlüssig festgesetzt werden kann.

Eine bevorzugte weitere Ausgestaltung der Erfindung sieht vor, dass nach dem Anheben das Fahrzeug zu einem Transportzielort transportiert und an diesem abgeladen wird, und dass nach dem Erreichen des Transportzieltorts durch die Transportmittel die Transportmittelteilmenge aufgelöst wird. Zunächst erfolgt also nach dem Anheben des Fahrzeugs der Transport des Fahrzeugs zu dem Transportzielort. An diesem wird das Fahrzeug abgeladen. Bevorzugt erfolgt dies in umgekehrter Reihenfolge wie das Aufladen.

Auch während des Abladens können die Transportmittel die wenigstens eine Fahrzeugkomponente des Fahrzeugs ansteuern, nämlich über die Kommunikationsverbindung. Beispielsweise wird das Abladen durch entsprechendes Ansteuern der Antriebseinrichtung und/oder der Bremsanlage des Fahrzeugs unterstützt. Nach dem Abladen beziehungsweise Absetzen des Fahrzeugs wird die Transportmittelteilmenge wieder aufgelöst, sodass die in der Transportmittelteilmenge bislang enthaltenen Transportmittel wieder als verfügbar gekennzeichnet werden und entsprechend von der Zentralsteuereinheit erneut einer Transportmittelteilmenge zugeordnet werden können.

Eine bevorzugte Weiterbildung der Erfindung sieht vor, dass die Transportmittel für die Transportmittelteilmenge anhand einer zum Erreichen des Transportstartorts und des Transportzielorts benötigten Energiemenge und/oder einer jeweils verbleibenden Restenergiemenge der Transportmittel ausgewählt werden. Die Transportmittel werden insoweit nur dann der Transportmittelteilmenge zugeordnet, wenn die Energiemenge, welche zum Erreichen erst des Transportstartorts und anschließend des Transportzielorts benötigt wird, kleiner ist als die verbleibende Restenergiemenge des jeweiligen Transportmittels.

Die Restenergiemenge beschreibt die verbleibende Reichweite des Transportmittels beziehungsweise der Transportmittel, also die Strecke, welche noch von diesem/diesen zurückgelegt werden kann. Bei der Ermittlung der benötigten Energiemenge kann beispielsweise eine Topologie der zu befahrenden Strecke zwischen dem Transportstartort und dem Transportzielort herangezogen werden, also beispielsweise Steigungen und/oder Gefälle auf dieser Strecke. Auch die momentane Verkehrslage kann in die Bestimmung der benötigten Energiemenge einfließen. Die nach Ankunft des Transportmittels an dem Transportzielort verbleibende Restenergiemenge kann grundsätzlich gleich oder zumindest nahezu Null sein. In diesem Fall ist es bevorzugt vorgesehen, das Transportmittel unmittelbar am Transportzielort aufzuladen oder von diesem abzuholen.

Eine Weiterbildung der Erfindung sieht vor, dass bei dem Auswählen der Transportmittel zusätzlich eine Entfernung des Transportzielorts von einer Wartungs- und/oder Ladeeinrichtung für die Transportmittel berücksichtigt wird. Das Transportsystem umfasst die wenigstens eine Wartungs- und/oder Ladeeinrichtung. An dieser können Wartungsarbeiten an den Transportmitteln durchgeführt werden, beispielsweise notwendige Reparaturen. Zusätzlich oder alternativ kann es vorgesehen sein, den Energiespeicher der Transportmittel aufzuladen. An der Wartungs- und/oder Ladeeinrichtung wird insoweit elektrische Energie zum Aufladen des Energiespeichers bereitgestellt.

Bei der Auswahl der Transportmittel wird nun zusätzlich berücksichtigt, ob diese nach Ankunft an dem Transportzielort, also nach dem Durchführen des Transports, über eine Restenergiemenge verfügen, welche ausreichend groß ist, um anschließend die Wartungs- und/oder Ladeeinrichtung erfolgreich anzufahren, diese also zu erreichen. Nur wenn dies der Fall ist, wird das Transportmittel der Transportmittelteilmenge zugeordnet. Anderenfalls wird ein anderes Transportmittel aus der Transportmittelgesamtmenge ausgewählt und der Transportmittelteilmenge zugeordnet.

Eine weitere Ausgestaltung der Erfindung sieht vor, dass die die Ladung gemeinsam aufnehmenden und/oder anhebenden Transportmittel zumindest während des Transports autonom einen zwischen ihnen vorliegenden Abstand konstant halten oder miteinander gekoppelt werden, insbesondere mechanisch, magnetisch und/oder pneumatisch. Es ist insoweit vorgesehen, dass die Transportmittel die Ladung nicht nur gemeinsam aufnehmen beziehungsweise anheben, sondern zudem auch gemeinsam den Transport der Ladung von dem Transportstartort zu dem Transportzielort durchführen.

Während des Transports sollen die Transportmittel den zwischen ihnen vorliegenden Abstand autonom konstant halten, wobei sie bevorzugt beabstandet voneinander vorliegen, also nicht unmittelbar miteinander verbunden sind. Eine Verbindung zwischen den Transportmittels ist insoweit ausschließlich über das Fahrzeug und/oder den Untergrund, auf welchem die Transportmittel sich bewegen, vorgesehen. Zum Konstanthalten des Abstands sind die Transportmittel oder wenigstens eines der Transportmittel mit entsprechenden Einrichtungen versehen, zum Beispiel mit wenigstens einem Abstandssensor, oder - vorteilhaft - mit mehreren Abstandssensoren, die bevorzugt zumindest teilweise unterschiedliche Ausrichtungen aufweisen. Der Abstandssensor beziehungsweise jeder der Abstandssensoren kann beispielsweise als optischer oder akustischer Abstandssensor ausgestaltet sein. Bevorzugt weist das Transportmittel Abstandssensoren unterschiedlicher Art auf, die zudem gleich ausgerichtet sind, also zum Beispiel einen optischen und einen akustischen Abstandssensor.

Zusätzlich oder alternativ kann es vorgesehen sein, dass die Transportmittel während des Transports miteinander gekoppelt sind. Hierbei ist es also vorgesehen, dass nach dem Erreichen des Transportstartorts und vor dem Aufnehmen des Fahrzeugs oder alternativ nach dem Aufnehmen des Fahrzeugs, jedoch vor dem Durchführen des Transports, die dem Transport des Fahrzeugs dienenden Transportmittel miteinander gekoppelt werden. Diese Kopplung wird bevorzugt nach dem Erreichen des Transportzielorts, insbesondere nach dem Absetzen des Fahrzeugs, beispielsweise gemeinsam mit dem Auflösen der Transportmittelteilmenge, wieder aufgelöst. Die Kopplung der Transportmittel kann beispielsweise mechanisch, magnetisch und/oder pneumatisch durchgeführt werden, wozu die Transportmittel entsprechende Einrichtungen aufweisen.

Unabhängig davon, ob die Transportmittel miteinander gekoppelt sind oder nicht und ob das Halten des Abstands zwischen ihnen autonom erfolgt, kann es vorgesehen sein, dass sich die in der Transportmittelteilmenge befindlichen Transportmittel in einer bestimmten, festgelegten Formation bewegen. Diese kann vor dem Aufnehmen des Fahrzeugs ermittelt werden, insbesondere in Abhängigkeit von dem Fahrzeug beziehungsweise von der Art des Fahrzeugs.

Eine weitere bevorzugte Ausgestaltung der Erfindung sieht vor, dass bei einem gemeinsamen Transport des Fahrzeugs mittels mehrerer Transportmittel, die in der Transportmittelteilmenge enthaltenen Transportmittel in wenigstens ein Mastertransportmittel und wenigstens ein Slavetransportmittel aufgeteilt werden. Das Mastertransportmittel übernimmt hierbei zumindest einige Funktionen des Slavetransportmittels, welches diese hierzu an das Mastertransportmittel abgibt. Beispielsweise übernimmt das Mastertransportmittel die alleinige Kommunikation mit der Zentralsteuereinheit und leitet Anweisungen der Zentralsteuereinheit an das Slavetransportmittel weiter.

In anderen Worten ist es vorgesehen, dass die Transportmittelteilmenge beziehungsweise die in ihr enthaltenen Transportmittel wenigstens teilweise, vorzugsweise vollständig, von dem wenigstens einen Mastertransportmittel gesteuert wird. Hierzu gibt das Mastertransportmittel entsprechende Anweisungen an das Slavetransportmittel, welches diese umsetzt. Umgekehrt werden keine solchen Anweisungen übertragen. Das Slavetransportmittel kann jedoch Statusmeldungen, beispielsweise über seinen Betriebszustand und/oder einer Umfeldüberwachung, an das Mastertransportmittel übermitteln. Die Umfeldüberwachung wird hierbei vorzugsweise mittels der bereits erwähnten Umfelderkennungseinrichtung durchgeführt.

Besonders bevorzugt ist es vorgesehen, dass das Mastertransportmittel eine zu fahrende Route selbst festlegt oder von der Zentralsteuereinheit übermittelt bekommt. Das Mastertransportmittel leitet die Route an die Slavetransportmittel weiter, sodass diese die Route selbstständig abfahren können. Alternativ kann es selbstverständlich vorgesehen sein, dass das Mastertransportmittel das Ansteuern einer Antriebseinrichtung und/oder einer Lenkeinrichtung des wenigstens einen Slavetransportmittels übernimmt, dieses also im Wesentlichen fernsteuert.

Die Erfindung betrifft selbstverständlich auch ein Transportsystem, insbesondere zur Durchführung des Verfahrens gemäß den vorstehenden Ausführungen, wobei das Transportsystem eine in einer Transportmittelgesamtmenge zusammengefasste Vielzahl von unabhängig voneinander bewegbaren, insbesondere emissionslosen Transportmitteln aufweist und dazu ausgebildet ist, bei Auftreten einer Transportmittelanforderung an einer Zentralsteuereinheit von dieser mehrere Transportmittel aus der Transportmittelgesamtmenge auszuwählen, einer Transportmittelteilmenge zuzuordnen und autonom einem Transportstartort zuzuführen, wobei die in der Transportmittelteilmenge enthaltenen Transportmittel dazu ausgebildet sind, an einem Transportstartort ein mehrere Radachsen aufweisendes Fahrzeug gemeinsam aufzunehmen, indem auf voneinander abgewandten Seiten der Radachsen jeweils wenigstens eines der Transportmittel benachbart zu wenigstens einem Rad der jeweiligen Radachse und in axialer Richtung bezüglich der Radachse des Rads gesehen in Überdeckung mit dem Rad angeordnet wird und anschließend die Transportmittel zum Anheben des Fahrzeugs autonom aufeinander zu verlagert werden oder indem auf einander zugewandten Seiten der Radachsen jeweils wenigstens eines der Transportmittel benachbart zu wenigstens einem Rad der jeweiligen Radachse und in axialer Richtung bezüglich der Radachse des Rads gesehen in Überdeckung mit dem Rad (angeordnet wird und anschließend die Transportmittel zum Anheben des Fahrzeugs autonom voneinander weg verlagert werden. Dabei ist vorgesehen, das die Transportmittel mittels einer Kommunikationsverbindung zu dem Fahrzeug wenigstens eine Fahrzeugkomponente des Fahrzeugs derart ansteuern, dass das Rad während des Aufladens frei drehbar ist oder sich zum Auffahren auf das Transportmittel dreht und/oder dass das Rad nach dem Aufladen, insbesondere während des Transports, blockiert ist.

Auf die Vorteile einer derartigen Vorgehensweise beziehungsweise einer derartigen Ausgestaltung des Transportsystems wurde bereits hingewiesen. Sowohl das Transportsystem als auch das Verfahren zu seinem Betreiben können gemäß dem vorstehenden Ausführungen weitergebildet sein, sodass insoweit auf diese verwiesen wird.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: ein Ablaufdiagramm eines Verfahrens zum Betreiben eines Transportsystems,
- Figur 2: Transportmittel des Transportsystems vor einem Anheben eines Fahrzeugs, sowie
- Figur 3: die Transportmittel des Transportsystems nach dem Anheben des Fahrzeugs.

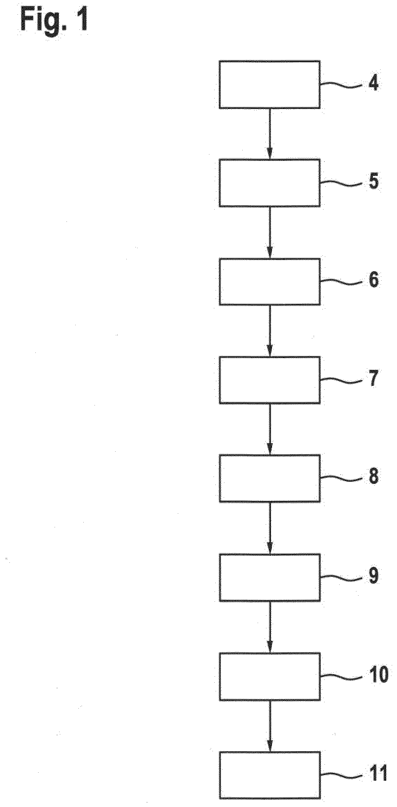

Die Figur 1 zeigt in schematischer Form ein Ablaufdiagramm eines Verfahrens zum Betreiben eines Transportsystems 1, das eine in einer Transportmittelgesamtmenge zusammengefasste Vielzahl von Transportmitteln 2 aufweist. Diese Transportmittel 2 sind unabhängig voneinander bewegbar sowie besonders bevorzugt emissionslos. Sie liegen insoweit beispielsweise als Elektrofahrzeuge oder dergleichen vor. Das Transportsystem 1 dient insbesondere dem Transport eines Fahrzeugs 3.

In einem ersten Schritt 4 des Verfahrens tritt eine Transportmittelanforderung an einer Zentralsteuereinheit auf, beispielsweise durch eine Bedienperson beziehungsweise einen Kunden oder alternativ durch eine Assistenzeinrichtung. Mit der Transportmittelanforderung können beispielsweise Informationen über die zu transportierende Ladung, also das Fahrzeug 3, übermittelt. Die Informationen können im Falle des Fahrzeugs 3 beispielsweise Fahrzeugdaten, insbesondere den Fahrzeugtyp, die Anzahl der Radachsen, die Anzahl der Räder oder dergleichen, umfassen.

Aus den Fahrzeugdaten, insbesondere dem Fahrzeugtyp, ermittelt die Zentralsteuereinheit wesentliche Daten, wie das zulässige Gesamtgewicht, die maximale Achslaste und/oder die Abmessungen des Fahrzeugs 3, beispielsweise unter Verwendung einer Datenbank. Es kann auch vorgesehen sein, dass die Informationen von einer Assistenzeinrichtung des Fahrzeugs 3 selbst übermittelt werden. In diesem Fall betätigt die Bedienperson lediglich die Assistenzeinrichtung des Fahrzeugs 3, welche wiederum die Transportmittelanforderung an die Zentralsteuereinheit übermittelt.

In einem Schritt 5 ermittelt die Zentralsteuereinheit Informationen über verfügbare Transportmittel 2, welche in der Transportmittelgesamtmenge zusammengefasst sind. Hierbei werden beispielsweise spezifische Daten der einzelnen Transportmittel 2 überprüft, wie beispielsweise der momentane Standort, die zum Erreichen des Transportstartorts und des Transportzielorts benötigte Energiemenge sowie die dem Transportmittel 2 verbleibende Restenergiemenge. Zusätzlich kann ermittelt werden, ob die Restenergiemenge nach dem Durchführen des Transports des Fahrzeugs 3 zum Erreichen einer Wartungs- und/oder Ladeeinrichtung für die Transportmittel 2 ausreichen würde.

Sich bereits in Verwendung befindliche Transportmittel 2, also insbesondere als nicht verfügbar gekennzeichnete Transportmittel 2, können herangezogen werden, falls sie sich zu einem bestimmten Zeitpunkt in der Nähe des Transportstartorts befinden und die weiteren Anforderungen erfüllen. Der bestimmte Zeitpunkt ist hierbei insbesondere die Ankunftszeit der anderen Transportmittel 2 an ihren jeweiligen Transportstartorten.

In einem Schritt 6 legt die Zentralsteuereinheit in Abhängigkeit von dem zu transportierenden Fahrzeug 3 die zum Durchführen des Transports hinreichende Transportmittelanzahl fest und stellt die Transportmittelteilmenge zusammen, welche eine der Transportmittelanzahl entsprechende Anzahl an Transportmitteln 2 enthält. Anschließend werden die der Transportmittelteilmenge zugeordneten Transportmittel 2 autonom dem Transportstandort zugeführt beziehungsweise das Zuführen zumindest begonnen.

Anschließend wird in einem Schritt 7 eine Bestätigungsanfrage durchgeführt, wobei die Transportmittel 2 bei auf die Bestätigungsanfrage folgende Bestätigung tatsächlich dem Transportstartort zugeführt werden. Bleibt die Bestätigung aus oder erfolgt eine aktive Stornierung, so wird die Transportmittelteilmenge wieder aufgelöst und die bislang in dieser enthaltenen Transportmittel 2 anderen Verwendungen zugeführt.

Das tatsächliche Zuführen der in der Transportmittelteilmenge enthaltenen Transportmittel 2 zu dem Transportstartort wird in einem Schritt 8 vorgenommen. Das bedeutet, das im Rahmen des Schritts 8 der Transportmittel 2 tatsächlich den Transportstartort erreichen.

In einem Schritt 9 wird nach dem Erreichen des Transportstartorts durch die Transportmittel 2 das Fahrzeug 3 aufgeladen und aus den einzelnen Transportmitteln 2 ein statischer Verband gebildet. Dieser Verband und die zwischen den Transportmitteln 2 des Verbands vorliegenden Abstände werden beispielsweise durch eine direkte Kommunikation der Transportmittel 2 untereinander eingestellt, insbesondere gesteuert und/oder geregelt.

In einem Schritt 10 werden die Transportmittel 2 zum Transportieren des Fahrzeugs 2 zu dem Transportzielort verwendet. Hierbei bewegen sie sich innerhalb des statischen beziehungsweise geschlossenen Verbands fort, dessen Abmessungen individuell, aufgrund der Abstände der Transportmittel 2 innerhalb des Verbands, der Abmessungen des Fahrzeugs 3 sowie der Abmessungen der Transportmittel 2 errechnet werden. Diese Abmessungen können als Eingangsgröße für eine Navigation beziehungsweise Routenführung der Transportmittel 2 herangezogen werden.

Besonders bevorzugt verfügen die Transportmittel 2 über eine Kommunikationseinrichtung zur Kommunikation mit dem zu transportierenden Fahrzeug 3. Beispielsweise steuern hierbei die Transportmittel 2 eine Signalanlage des Fahrzeugs 2 an, beispielsweise eine Fahrtrichtungsanzeigeanlage und/oder eine Bremsanzeigeanlage. Hierzu kann eine Kommunikationsverbindung, beispielsweise eine drahtgebundene oder drahtlose Kommunikationsverbindung hergestellt werden.

In einem Schritt 11 kommen die Transportmittel 2 zusammen mit dem Fahrzeug 3 an dem Transportzielort an. Anschließend wird das Fahrzeug 3 abgeladen und die Transportmittelteilmenge aufgelöst. Das Abladen erfolgt bevorzugt erst dann, sobald einer Zentralsteuereinheit eine Transportbestätigung eingeht, welche beispielsweise durch die Bedienperson ausgelöst wird beziehungsweise auszulösen ist.

Selbstverständlich kann es auch vorgesehen sein, dass der Schritt 11 bereits vorzeitig, also vor dem Erreichen des Transportzielorts, ausgelöst wird, insbesondere indem die Bedienperson und/oder die Assistenzeinrichtung den Transport vorzeitig abbricht. In diesem Fall wird der Transport bereits vor dem Erreichen des Transportzielorts abgebrochen und das Fahrzeug 3 von den Transportmitteln 3 abgeladen.

Das beschriebene Verfahren zum Betreiben des Transportsystems 1 ist äußerst flexibel einsetzbar. Zudem kann das Transportsystem 1 sehr modular aufgebaut sein und aus gleichen oder unterschiedlichen Transportmitteln 2 bestehen.

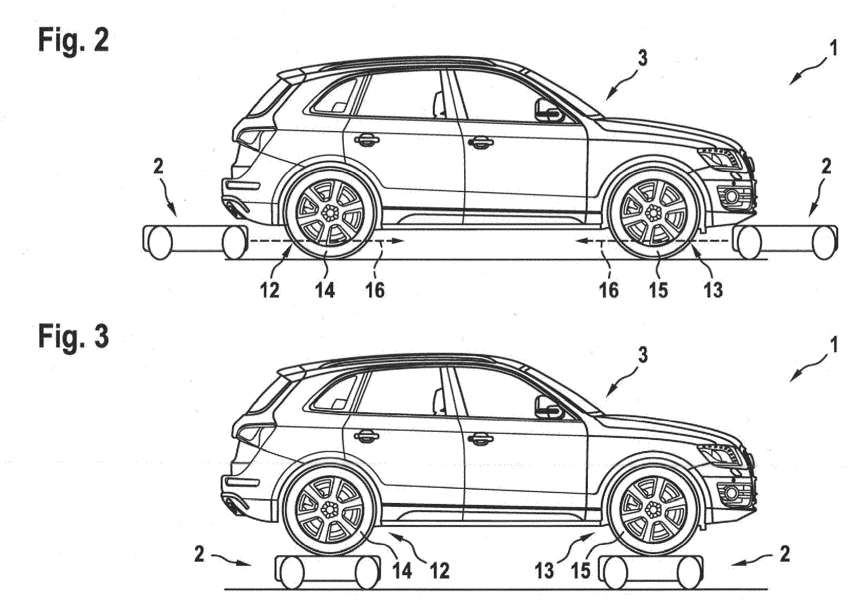

Die Figur 2 zeigt einen Teil des Transportsystems 1, nämlich die in der Transportmittelteilmenge zusammengefassten Transportmittel 2, welche an dem Transportstartort zum Aufnehmen des Fahrzeugs 3 vorliegen. Das Fahrzeug 3 weist mehrere Radachsen 12 und 13 auf, welche jeweils über mehrere Räder 14 beziehungsweise 15 verfügen. Das Aufnehmen des Fahrzeugs 3 durch die Transportmittel 2 erfolgt nun derart, indem die Transportmittel 2 auf einander abgewandten Seiten der Radachsen 12 beziehungsweise 13 angeordnet werden, nämlich benachbart zu dem wenigstens einen Rad 14 beziehungsweise 15 der jeweiligen Radachse 12 beziehungsweise 13.

In anderen Worten wird in dem hier dargestellten Ausführungsbeispiel eines der Transportmittel 2 vor und ein anderes der Transportmittel 2 hinter dem Fahrzeug 3 (bezogen auf dessen Vorwärtsfahrtrichtung) angeordnet. Anschließend werden die Transportmittel 2 zum Anheben des Fahrzeugs 3 autonom aufeinander zu verlagert. Dies ist durch die Pfeile 16 angedeutet.

Nach dem Anheben des Fahrzeugs 3 durch die Transportmittel 2 liegt der in der Figur 3 gezeigte Zustand vor. Das Fahrzeug 3 ist nun auf den Transportmitteln 2 angeordnet und kann von diesen zu dem Transportzielort transportiert werden. Bevorzugt wird vor oder während des Durchführens des Transports die Antriebseinrichtung des Fahrzeugs 3 derart angesteuert, dass Emissionen des Fahrzeugs 3 unterbunden werden. Insbesondere wird also ein beispielsweise als Brennkraftmaschine ausgeführtes Antriebsaggregat der Antriebseinrichtung abgeschaltet.

Insoweit ist mittels der Transportmittel 2 ein Einfahren des Fahrzeugs 3, welches über das Antriebsaggregat verfügt, auch in Gebiete möglich beziehungsweise zulässig, in welchem ein Betrieb des Antriebsaggregats nicht erlaubt ist, beispielsweise aufgrund gesetzlicher Bestimmungen.

## Patentansprüche

1. Verfahren zum Betreiben eines Transportsystems (1), das eine in einer Transportmittelgesamtmenge zusammengefasste Vielzahl von unabhängig voneinander bewegbaren, insbesondere emissionslosen Transportmitteln (2) aufweist und wobei bei Auftreten einer Transportmittelanforderung an einer Zentralsteuereinheit von dieser mehrere Transportmittel (2) aus der Transportmittelgesamtmenge ausgewählt, einer Transportmittelteilmenge zugeordnet und autonom einem Transportstartort zugeführt werden, wobei an dem Transportstartort ein mehrere Radachsen (12,13) aufweisendes Fahrzeug (3) von den in der Transportmittelteilmenge enthaltenen Transportmitteln (2) gemeinsam aufgenommen wird, indem entweder auf voneinander abgewandten Seiten der Radachsen jeweils wenigstens eines der Transportmittel (2) benachbart zu wenigstens einem Rad (14,15) der jeweiligen Radachse (12,13) und in axialer Richtung bezüglich der Radachse (12,13) des Rads (14,15) gesehen in Überdeckung mit dem Rad (14,15) angeordnet wird und anschließend die Transportmittel (2) zum Anheben des Fahrzeugs (3) autonom aufeinander zu verlagert werden oder indem auf einander zugewandten Seiten der Radachsen jeweils wenigstens eines der Transportmittel (2) benachbart zu wenigstens einem Rad (14,15) der jeweiligen Radachse (12,13) und in axialer Richtung bezüglich der Radachse (12,13) des Rads (14,15) gesehen in Überdeckung mit dem Rad (14,15) angeordnet wird und anschließend die Transportmittel (2) zum Anheben des Fahrzeugs (3) autonom voneinander weg verlagert werden, **dadurch gekennzeichnet, dass** die Transportmittel (2) mittels einer Kommunikationsverbindung zu dem Fahrzeug (3) wenigstens eine Fahrzeugkomponente des Fahrzeugs (3) derart ansteuern, dass das Rad (14,15) während des Aufladens frei drehbar ist oder sich zum Auffahren auf das Transportmittel (2) dreht und optional zusätzlich dass das Rad (14,15) nach dem Aufladen blockiert ist.

2. Verfahren nach Anspruch 1, **dadurch gekennzeichnet, dass** als Fahrzeugkomponente eine Signalanlage des Fahrzeugs (3) oder eine Antriebseinrichtung des Fahrzeugs (3), insbesondere ein Antriebsaggregat und/oder ein Gangwechselgetriebe, und/oder eine Bremsanlage des Fahrzeugs (3) verwendet wird.

3. Verfahren nach einem der vorhergehenden Ansprüche, **dadurch gekennzeichnet, dass** das Fahrzeug (3) nach dem Anheben, insbesondere während des Transports, auf den Transportmitteln (2) festgesetzt wird.

4. Verfahren nach einem der vorhergehenden Ansprüche, **dadurch gekennzeichnet, dass** nach dem Anheben das Fahrzeug (3) zu einem Transportzielort transportiert und an diesem abgeladen wird, und dass nach dem Erreichen des Transportzielorts durch die Transportmittel (2) die Transportmittelteilmenge aufgelöst wird.

5. Verfahren nach Anspruch 4, **dadurch gekennzeichnet, dass** die Transportmittel (2) für die Transportmittelteilmenge anhand einer zum Erreichen des Transportstartorts und des Transportzielorts benötigten Energiemenge und/oder einer jeweils verbleibenden Restenergiemenge der Transportmittel (2) ausgewählt wird.

6. Verfahren nach Anspruch 5, **dadurch gekennzeichnet, dass** bei dem Auswählen der Transportmittel (2) zusätzlich eine Entfernung des Transportzielorts von einer Wartungs- und/oder Ladeeinrichtung für die Transportmittel (2) berücksichtigt wird.

7. Verfahren nach einem der vorhergehenden Ansprüche, **dadurch gekennzeichnet, dass** die das Fahrzeug (3) gemeinsam aufnehmenden und/oder anhebenden Transportmittel (2) zumindest während des Transports autonom einen zwischen ihnen vorliegenden Abstand konstant halten oder miteinander gekoppelt werden, insbesondere mechanisch, magnetisch und/oder pneumatisch.

8. Transportsystem (1), insbesondere zur Durchführung des Verfahrens nach einem oder mehreren der vorhergehenden Ansprüche, wobei das Transportsystem (1) eine in einer Transportmittelgesamtmenge zusammengefasste Vielzahl von unabhängig voneinander bewegbaren, insbesondere emissionslosen Transportmitteln (2) aufweist und dazu ausgebildet ist, bei Auftreten einer Transportmittelanforderung an einer Zentralsteuereinheit von dieser mehrere Transportmittel (2) aus der Transportmittelgesamtmenge auszuwählen, einer Transportmittelteilmenge zuzuordnen und autonom einem Transportstartort zuzuführen, wobei die in der Transportmittelteilmenge enthaltenen Transportmittel (2) dazu ausgebildet sind, an dem Transportstartort ein mehrere Radachsen (12,13) aufweisendes Fahrzeug (3) gemeinsam aufzunehmen, indem entweder auf voneinander abgewandten Seiten der Radachsen jeweils wenigstens eines der Transportmittel (2) benachbart zu wenigstens einem Rad (14,15) der jeweiligen Radachse (12,13) und in axialer Richtung bezüglich der Radachse (12,13) des Rads (14,15) gesehen in Überdeckung mit dem Rad (14,15) angeordnet wird und anschließend die Transportmittel (2) zum Anheben des Fahrzeugs (3) autonom aufeinander zu verlagert werden oder indem auf einander zugewandten Seiten der Radachsen jeweils wenigstens eines der Transportmittel (2) benachbart zu wenigstens einem Rad (14,15) der jeweiligen Radachse (12,13) und in axialer Richtung bezüglich der Radachse (12,13) des Rads (14,15) gesehen in Überdeckung mit dem Rad (14,15) angeordnet wird und anschließend die Transportmittel (2) zum Anheben des Fahrzeugs (3) autonom voneinander weg verlagert werden, **dadurch gekennzeichnet, dass** die Transportmittel (2) dazu ausgebildet sind, mittels einer Kommunikationsverbindung zu dem Fahrzeug (3) wenigstens eine Fahrzeugkomponente des Fahrzeugs (3) derart ansteuern, dass das Rad (14,15) während des Aufladens frei drehbar ist oder sich zum Auffahren auf das Transportmittel (2) dreht und optional zusätzlich dass das Rad (14,15) nach dem Aufladen blockiert ist.

## Claims

1. Method for operating a transport system (1), which has a plurality of transport means (2), which can be moved independently of one another and are in particular emission-free, combined into a overall set of transport means, and wherein when a transport means request occurs at a central control unit, the latter selects a plurality of transport means (2) from the overall set of transport means, assigns them to a transport means subset and autonomously directs them to a transport starting location, wherein at the transport starting location a vehicle (3) having a plurality of wheel axles (12, 13) is jointly received by the transport means (2) contained in the transport means subset, in that either on sides of the wheel axles facing away from one another at least one of the transport means (2) arranged adjacent to at least one wheel (14, 15) of the respective wheel axis (12, 13) and as viewed in axial direction with respect to the wheel axis (12, 13) of the wheel (14, 15) is overlapping with the wheel (14, 15), and subsequently the transport means (2) are moved autonomously towards one another for lifting the vehicle (3) or in that on mutally facing sides of the wheel axles, in each case at least one of the transport means (2) is arranged adjacent to at least one wheel (14, 15) of the respective wheel axle (12, 13) and, as viewed in axial direction with respect to the wheel axle (12, 13) of the wheel (14, 15) is overlapping with the wheel (14, 15) and subsequently the transport means (2) are moved away from one another autonomously for lifting the vehicle (3), **characterised in that** the transport means (2) by means of communication connection to the vehicle (3) control at least one vehicle component of the vehicle (3) such that the wheel (14, 15) is freely rotatably during loading or rotates for driving onto the transport means (2) and optionally additionally that the wheel (14, 15) is blocked after loading.

2. Method according to claim 1, **characterised in that** a signalling system of the vehicle (3) or a drive apparatus of the vehicle (3), in particular a drive unit and/or a gear change transmission and/or a brake system of the vehicle (3) is used as the vehicle component.

3. Method according to any of the preceding claims, **characterised in that** the vehicle (3) is fixed onto the transport means (2) after lifting, in particular during transport.

4. Method according to any of the preceding claims, **characterised in that** after the lifting the vehicle (3) is transported to a transport destination and unloaded there, and **in that** after reaching the transport destination by the transport means (2) the transport means subset is dispersed.

5. Method according to claim 4, **characterised in that** the transport means (2) for the transport means subset is selected on the basis of the amount of energy required to reach the transport starting location and the transport destination and/or a respective remaining amount of energy of the transport means (2).

6. Method according to claim 5, **characterised in that** when selecting the transport means (2) a distance of the transport destination from a maintenance and /or loading apparatus for the transport means (2) is additionally taken into account.

7. Method according to any of the preceding claims, **characterised in that** the transport means (2) jointly receiving and/or lifting the vehicle (3) autonomously maintain a constant distance between them or are coupled to one another, in particular mechanically, magnetically and/or pneumatically during transport.

8. Transport system (1), in particular for performing the method according to one or more of the preceding claims, wherein the transport system (1) has a plurality of transport means (2), which can be moved independently of one another and are in particular emission-free, combined into a overall set of transport means, and is configured so that when a transport means request occurs at a central control unit the latter selects a plurality of transport means (2) from the overall set of transport means, assigns them to a transport means subset and autonomously directs them to a transport starting location, wherein the transport means (2) included in the transport means subset are configured to jointly receive at the transport starting location a vehicle (3) having a plurality of wheel axes (12, 13), in that either on sides of the wheel axles facing away from one another at least one of the transport means (2) arranged adjacent to at least one wheel (14, 15) of the respective wheel axis (12, 13) and viewed in axial direction with respect to the wheel axis (12, 13) of the wheel (14, 15) is arranged overlapping with the wheel (14, 15), and subsequently the transport means (2) are moved autonomously towards one another for lifting the vehicle (3) or in that on mutally facing sides of the wheel axles, in each case at least one of the transport means (2) is arranged adjacent to at least one wheel (14, 15) of the respective wheel axle (12, 13) and, as viewed in axial direction with respect to the wheel axle (12, 13) of the wheel (14, 15) is overlapping with the wheel (14, 15) and subsequently the transport means (2) are moved away from one another autonomously for lifting the vehicle (3), **characterised in that** the transport means (2) are configured by means of communication connection to the vehicle (3) to control at least one vehicle component of the vehicle (3) such that the wheel (14, 15) is freely rotatably during loading or rotates for driving onto the transport means (2) and optionally additionally that the wheel (14, 15) is blocked after loading.

## Revendications

1. Procédé de fonctionnement d'un système de transport (1) qui présente une pluralité de moyens de transport (2) mobiles indépendamment les uns des autres, en particulier sans émissions, regroupés dans une quantité totale de moyens de transport, et dans lequel, lors de la survenue d'une demande de moyens de transport sur une unité de commande centrale, plusieurs moyens de transport (2) sont sélectionnés par celle-ci à partir de la quantité totale de moyens de transport, sont associés à une quantité partielle de moyens de transport et sont amenés de manière autonome à un lieu de départ de transport, dans lequel un véhicule (3) présentant plusieurs axes de roue (12,13) est pris en charge conjointement par les moyens de transport (2) contenus dans la quantité partielle de moyens de transport au lieu de départ du transport, soit en disposant sur des côtés opposés l'un à l'autre des axes de roue respectivement au moins un des moyens de transport (2) à proximité d'au moins une roue (14,15) de l'axe de roue respectif (12,13) et, vu dans la direction axiale par rapport à l'axe de roue (12,13) de la roue (14,15), en recouvrement avec la roue (14,15), puis les moyens de transport (2) sont déplacés de manière autonome l'un vers l'autre pour soulever le véhicule (3), soit en disposant sur des côtés orientés l'un vers l'autre des axes de roue respectivement au moins un des moyens de transport (2) à proximité d'au moins une roue (14,15) de l'axe de roue respectif (12,13) et, vu dans la direction axiale par rapport à l'axe de roue (12,13) de la roue (14,15), en recouvrement avec la roue (14,15), puis les moyens de transport (2) sont déplacés de manière autonome en s'éloignant l'un de l'autre pour soulever le véhicule (3), **caractérisé en ce que** les moyens de transport (2) commandent au moyen d'une liaison de communication avec le véhicule (3) au moins un composant de véhicule du véhicule (3) de sorte que la roue (14,15) peut tourner librement pendant le chargement ou tourne pour heurter le moyen de transport (2) et facultativement en plus que la roue (14,15) est bloquée après le chargement.

2. Procédé selon la revendication 1, **caractérisé en ce qu**'une installation de signalisation du véhicule (3) ou un dispositif d'entraînement du véhicule (3), en particulier un groupe d'entraînement et/ou une boîte de vitesses, et/ou un système de freinage du véhicule (3), est utilisé comme composant de véhicule.

3. Procédé selon l'une quelconque des revendications précédentes, **caractérisé en ce que** le véhicule (3) est immobilisé sur les moyens de transport (2) après avoir été soulevé, en particulier pendant le transport.

4. Procédé selon l'une quelconque des revendications précédentes, **caractérisé en ce qu'**après le levage, le véhicule (3) est transporté vers un lieu de destination de transport et déchargé à cette destination, et **en ce qu'**une fois la destination de transport atteinte par les moyens de transport (2), la quantité partielle de moyens de transport est dissoute.

5. Procédé selon la revendication 4, **caractérisé en ce que** les moyens de transport (2) pour la quantité partielle de moyens de transport sont sélectionnés à l'aide d'une quantité d'énergie nécessaire pour atteindre le lieu de départ de transport et le lieu de destination de transport et/ou d'une quantité d'énergie résiduelle restante respective des moyens de transport (2).

6. Procédé selon la revendication 5, **caractérisé en ce que** lors de la sélection des moyens de transport (2), il est en outre tenu compte d'une distance entre le lieu de destination de transport et un dispositif de maintenance et/ou de chargement pour les moyens de transport (2).

7. Procédé selon l'une quelconque des revendications précédentes, **caractérisé en ce que** les moyens de transport (2) recevant et/ou soulevant conjointement le véhicule (3) maintiennent de manière autonome, au moins pendant le transport, une distance constante entre eux ou sont couplés entre eux, notamment mécaniquement, magnétiquement et/ou pneumatiquement.

8. Système de transport (1), en particulier pour la mise en oeuvre du procédé selon une ou plusieurs des revendications précédentes, dans lequel le système de transport (1) présente une pluralité de moyens de transport (2) mobiles indépendamment les uns des autres, en particulier sans émissions, regroupés dans une quantité totale de moyens de transport, et est conçu pour, lors de la survenue d'une demande de moyens de transport sur une unité de commande centrale, sélectionner plusieurs moyens de transport (2) par celle-ci à partir de la quantité totale de moyens de transport, les associer à une quantité partielle de moyens de transport et les amener de manière autonome à un lieu de départ de transport, dans lequel les moyens de transport (2) contenus dans la quantité partielle de moyens de transport sont conçus pour recevoir conjointement, au lieu de départ de transport, un véhicule (3) présentant plusieurs axes de roues (12,13), soit en disposant sur des côtés opposés l'un à l'autre des axes de roue respectivement au moins un des moyens de transport (2) à proximité d'au moins une roue (14,15) de l'axe de roue respectif (12,13) et, vu dans la direction axiale par rapport à l'axe de roue (12,13) de la roue (14,15), en recouvrement avec la roue (14,15), puis les moyens de transport (2) sont déplacés de manière autonome l'un vers l'autre pour soulever le véhicule (3), soit en disposant sur des côtés orientés l'un vers l'autre des axes de roue respectivement au moins un des moyens de transport (2) à proximité d'au moins une roue (14,15) de l'axe de roue respectif (12,13) et, vu dans la direction axiale par rapport à l'axe de roue (12,13) de la roue (14,15), en recouvrement avec la roue (14,15), puis les moyens de transport (2) sont déplacés de manière autonome en s'éloignant l'un de l'autre pour soulever le véhicule (3), **caractérisé en ce que** les moyens de transport (2) sont conçus pour commander au moyen d'une liaison de communication avec le véhicule (3) au moins un composant de véhicule du véhicule (3) de sorte que la roue (14,15) peut tourner librement pendant le chargement ou tourne pour heurter le moyen de transport (2) et facultativement en plus que la roue (14,15) est bloquée après le chargement.
